# EUROPEAN PATENT APPLICATION

(11) **EP 4 012 599 A1**
(43) Date of publication of application: **15.06.2022**
(21) Application number: 21196361.6
(22) Date of filing: 13.09.2021
(51) Int. Cl.: G06K 7/00, G06F 3/16, G10L 15/22, G06F 1/16, G06K 7/10

(54) **RFID SMART GARMENT WITH VOICE CONTROL AND TAG SIGNAL STRENGTH INDICATOR**

(30) Priority: 08.12.2020 US 202017114800
(71) Applicant: DJB Group LLC, Dublin, OH 43017 (US); Wistron NeWeb Corporation, Hsinchu 308 (TW)
(72) Inventor: BURNSIDE, Walter D, Dublin, 43017 (US); TSAI, Chi-Hao, Dublin, 43017 (US); TSAI, Wei-Feng, Dublin, 43016 (US)
(74) Representative: Findlay, Alice Rosemary

(57) **Abstract**

An RFID tag reading system arranged to by carried by an operator while the operator's hands and arms remain free to accomplish tasks, the system including an RFID reader and a computer interconnected to the reader to control functions the reader and receive data generated by the reader, the computer being responsive to word commands from the operator to effectuate different functions of the reader.

## Description

The invention relates to systems and methods by which a person carrying an RFID reader and associated computer can efficiently and accurately provide inventory data at a facility.

RFID technology is well known and is useful in providing inventory data particularly at large retail stores and more recently at on-line stores, sometimes referred to as fulfillment centers. U.S. Patent 9,213,874 discloses an RFID tag sensing garment typically worn by an employee at a facility. The garment disclosed in this patent affords an advance in productivity since it is capable of registering the presence of RFID tags (hereafter simply "tags") and therefore their associated goods while the employee is simply passing through a facility or engaged in some other activity besides taking inventory.

The invention at least in the preferred embodiments provides an RFID smart garment or wearable system having a reader/computer that communicates both ways with the person (hereafter the operator) wearing the system in a hands-free manner. The operator, for example, can instruct the reader to start recording, stop recording, report results to a main computer or server and clear its memory.

The reader has an associated single or small board computer programmed to receive simple instructions for the reader, verify receipt of instructions and indicate the signal strength from a tag. Preferably, communication between the operator and reader/computer is audio, thereby leaving the hands of the operator free to gather, reposition, and re-stock the inventory or perform other manual duties.

The system can be implemented with the garment and antennas disclosed in aforementioned U.S. Patent 9,213,874.

The invention will now be further described by way of example with reference to the accompanying drawings, in which:
FIG. 1 is a showing of an operator wearing a smart garment of the invention in the form of a vest;
FIG. 2 is a rear view of the operator illustrating one arrangement of an antenna array, a reader/computer and associated battery;
FIG. 3 is a side view of the operator diagrammatically illustrating the distribution of radiation from an antenna array of the RFID reader system associated with the smart garment;
FIG. 4 is a view of a preferred antenna array depicted in a flat configuration; and
FIG. 5 is a block diagram showing the relationship of various elements.

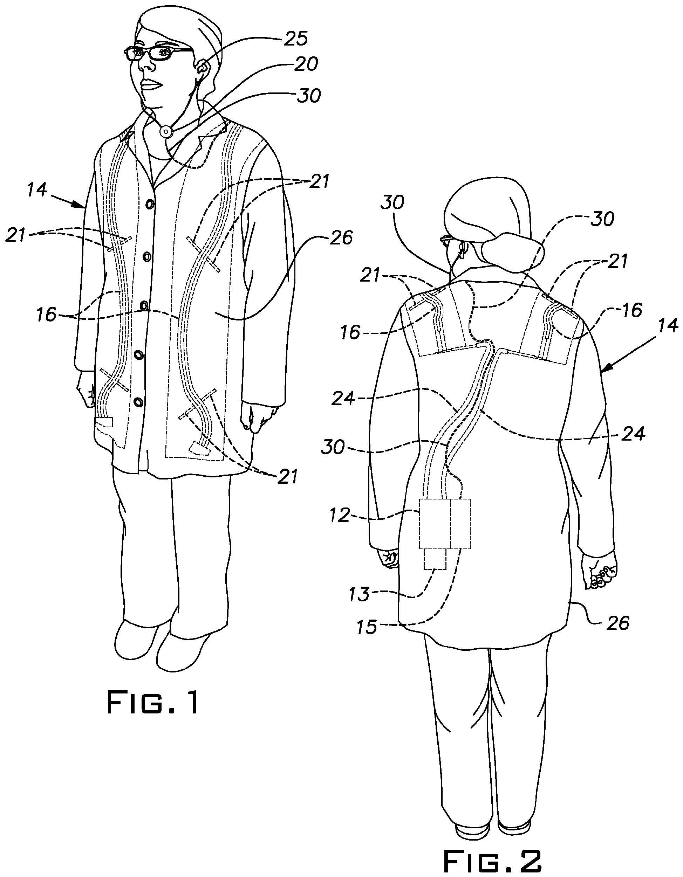

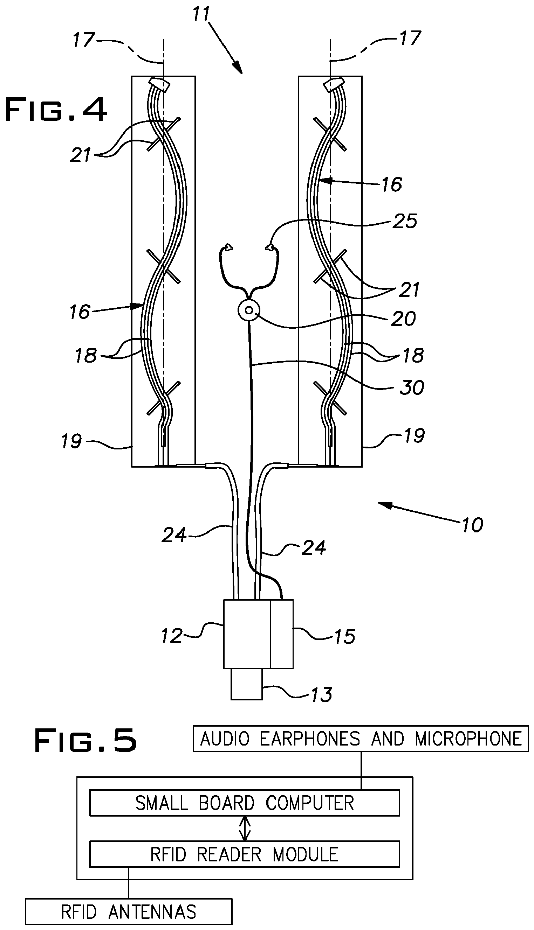

A portable RFID system 10 that includes an antenna array 11, a reader 12, a computer 15 and a battery power supply 13 is laid out in the plane of the drawing for illustration purposes in FIG. 4. A person or operator 14 depicted in FIGS. 1-3 carries the system 10 to scan tags each associated with an individual object, typically a product, a component, package, or the like. With the system 10, the operator 14 is free to circulate through a space where RFID tagged goods are situated such as, by way of example, a fulfillment center, a retail store, warehouse, factory, shipping depot, medical facility, or other space.

A preferred antenna array 11 can be similar to that disclosed in U.S. Pat. No. 8,058,998. The present antenna array 11 for radiating or receiving electromagnetic signals, unlike that disclosed in this patent, comprises highly flexible elongated antennas 16 that can be readily folded out of a single plane and are of limited length.

Referring again to FIG. 4, the antenna array 11 preferably comprises two serpentine antennas 16. Each antenna 16, while lying on a flat support, has an elongated axis indicated by the broken line 17 across which a pair of parallel curvilinear feed lines 18 pass back and forth. The antennas 16 may be constructed of a rectangular, flexible, dielectric base sheet or film 19 such as Mylar^{®} on which the feed lines 18, made of an electrically conductive material such as a copper or an aluminum foil, are adhesively attached or otherwise fixed. At spaced locations, the feed lines 18 have perturbations in the form of relatively short stubs 21. The stubs or dipole radiators 21 which are designed to radiate RF energy are typically made of the same material as the feed lines 18 and are electrically connected to a respective feed line. Adjacent pairs of the stubs 21, one on each feed line 18, form dipoles. Preferably, each stub 21 extends at a right angle to the local part of the feed line 18 to which it is joined.

An antenna 16 measured along its axis 17 is about 3 ft. long and the base sheet 19 supporting the stubs 21 is about 7 in. wide. Each antenna 16 is encased in a high durability water-resistant elongated flat fabric pouch 22. A soft cushion layer of batting 23 is placed in the pouch 22 on the side of the antenna 16 which is to face the operator 14 that will carry the antenna array 11. A coaxial cable 24, with its center conductor and its outer conductive sheath each connected to one of the feed lines 18 of the associated antenna 16 projects out of a pouch 22.

An effective way of deploying the antenna array 11 is to attach the individual antennas 16 to the inside of a vest 26 or similar garment. Preferably, the antennas 16 are positioned in the garment 26 so that one is on the left and one is on the right and the major length of each is at the front of the garment. The cables 24 are disposed on the inside back of the garment 26 and the radiators or stubs 21 proximate to a cable of each antenna are adjacent a shoulder of the garment 26.

The pouches 22 are preferably releasably held in place on the interior of the garment 26 by a suitable technique such as with Velcro^{®}, snaps, buttons, zippers, pockets or other suitable fasteners. The releasable fasteners enable the pouch to be removed from the garment 26 so that the garment can be laundered or even replaced.

The RFID reader 12 is connected to the antennas 16 through the respective cables 24. The reader 12, computer 15 and power supply 13, typically a rechargeable battery electrically connected to the reader and computer 15, are carried by the operator 14 wearing the garment 26. The reader 12 and computer 15 integrated as a single device, and power supply 13 can be located in an inner pocket on the garment 26, secured by fasteners to the garment, mounted on a waist belt separate from the garment or otherwise carried on the body of the operator 14.

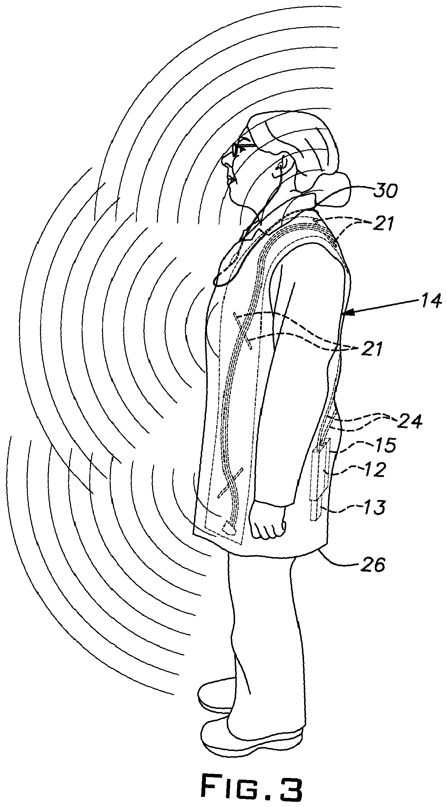

FIGS. 1-3 illustrate a preferred arrangement of the antenna array 11 being worn by the operator or individual 14. FIG. 3 is a diagrammatic representation of the RF beams produced by the individual dipole radiators 21 when the reader powers the antennae. It will be understood that the antenna array 11 radiates into a near space in front of and to the sides of the operator 14 wearing it in a pattern that is generally columnar, extending from floor level to a level overhead of the operator 14. Depending on the selected power level, the range of the antenna array 11 can be between 2 and 10 ft.

RF power density that reaches the user is minimal. The power is distributed across all of the antenna stubs 21. Antennas are preferably alternately powered, thus cutting the duty cycle in half. Further, the antennas 16 are not operated when the reader 12 is processing data further reducing the duty cycle of the antennas. The reader 12 energizes the antenna dipoles 21 and receives RFID signals from tags through the antenna dipoles. Where desired, the operator 14 wearing the garment 26 can be shielded from antenna radiation by providing a reflective material, for example, in the form of a conductive metal film or cloth next to the operator. The spacing of this reflective material, which can be provided, for example, by the batting 23, should be at least 3/4 in. from the dipoles 21.

With reference to FIG. 5, the computer 15 is preferably a single board or small board computer hard wired to the reader 12 to enable the computer to control functions of the reader. The reader 12 and/or computer 15 may include a processor (such as an integrated circuit), discrete circuitry, memory, transceivers (or transmitters and/or receivers individually), and/or input/output interfaces (such as ports, terminals, and the like). The computer 15 receives word commands from the operator 14 by way of a microphone 20 and the computer sends audio signals to the operator by way of headphones or ear buds 25. Both the microphone 20 and earphones 25 communicate to or from the computer by wire through a cable 30 that may be hard wired or connected via an input/output interface. Alternatively, these signals can be sent wirelessly, for example, via BLUETOOTH or like communication protocols. Other alternatives include a microphone and speaker both physically associated with the computer 15.

Data collected by the reader 12 is immediately sent to the small board computer 15 that processes the data and creates audio signals related to the tags being read. For example, the computer 15 is programmed to create an audio signal to the operator 14 for each new tag being seen by the reader module. This signal varies in intensity based on the RFID received signal strength coming from the individual tags. A weak tag signal converted to a proportionately weak or low intensity audio signal by the computer 15 and transmitted to the operator 14 via the head phones 25 can prompt the operator to pay special attention to the zone being surveyed by the reader so as to detect all other tags in the relevant zone, even prompting the operator to shuffle or otherwise disturb the tagged goods in the zone to assure all present tags are read. Audio intensity from the computer 15 can for example, vary in loudness, frequency of an intermittent sound, or pitch. While audio signals from the computer 15 are preferred when a tag is detached, other techniques are contemplated such as visible light or vibration, both of which can be modified to signal weak or strong tag signals. The audio microphone, such as found in a normal audio headset, is used to control the various reader functions. Some typical control functions or audio commands are "start reader", "stop reader", etc. The small board computer 15, responding to these commands, redefines the functionality of the reader and provides associated audio features. Using this approach, the smart garment operator 14 can remain hands-free and use their hands to provide important functions.

The computer 15 is programmed to collect a wide variety of tag data using audio information to automate this process in a hands-free manner. This is done by allowing the reader 12 to be controlled using various audio commands or sounds coming from and going to the operator 14, respectively. Following is an example of such use: Consider that one wants to use system 10 to operate in an on-line business environment such as a fulfillment center. The on-line items are stored in a very large warehouse with all related items located together, such as in stacks of clothing items. Using the system 10, the operator 14 could proceed to the first clothing item stack. At this clothing stack, he could say "CLEAR", which will throw away any earlier tag data collected by the reader and start the reader data collection. Subsequentially, the reader will collect tag data coming from the desired clothing stack as well as tagged cloths in the surrounding stacks. Sounds generated by the computer 15, such as a "beep" are used by the operator 14 to make sure all the potential tags are read. Note that a sound is sounded only once when a new tag is seen. When no sounds are emitted by the computer 15, it can be assumed all the tags at the location of the operator 14 have been read. Once this process is complete, the operator 14 could say "SAVE", which will only save all the new tag numbers seen in the cloths stack and potentially surrounding cloths stacks. When the reader/computer gets this "SAVE" command, it verifies the same when it sends an audio response to the operator 14 saying, for example, "INPUT DATA HEADER". The operator 14 will then define an appropriate header such as saying "CLOTHING STACK DATA (END)". Thus, the reader 12 will store this data as belonging to the specific clothing stack from which the operator took the product or products to be delivered to the customer. Next the operator 14 moves away from all the items and says "CLEAR" once again. Once the reader removes all the previously recorded tag data and starts a new data collection process, the reader 12 will only read the items in the arms of the operator 14. Once the computer emitted sound ends indicating that all the hand-carried tags are read, the operator again says "SAVE". The reader 12 will respond by saying to the operator "INPUT DATA HEADER" as done before. This time the operator could say "CUSTOMER ITEM DATA (END)". The reader 12 takes this data and uses it to "cleanup" the previous "CLOTH STACK DATA". This is done by first using the "CUSTOMER ITEM DATA", which is used to first determine the new SKU number, retrieved from a server at the facility of the tagged items carried by the operator. Knowing this specific SKU number, the reader will take the "CLOTH STACK DATA" and only keep the data associated with the same SKU number as those being carried by the operator 14. In addition, the tag numbers of items carried by the operator 14 are removed from the "CLOTH STACK DATA". Therefore, the precise inventory information is used to update the complete operation or facility inventory. Next, the operator 14 repeats the same process to get all the items that the customer requested. When this done, the operator 14 places all the items in a plastic tagged bin. When the operator 14 gets to this bin and about to load the items into the bin, he tells the reader 12 to "CLEAR". This time the reader 12 will record all the item tag numbers loaded into bin as well as the bin tag number. Once this action is completed, the operator 14 has completed the order for a customer. Also, the customer order was checked by the RFID system 10 and the on-line operation or facility inventory has been totally updated. So all this information is sent to appropriate software within the on-line operation through the Wi-Fi connection of the computer 15. The audio communication between the operator 14 and computer 15 is used to provide all this inventory information in a hands-free and extremely efficient manner.

The actual commands and system operation can be designed in a unique way for any user. This is possible because of the small board computer 15 integrated into reader 12 that is used to implement all of these very valuable functions. In summary, the system 10 allows the operator 14 to function as normally done in a hands-free manner. The process provides all the inventory information still at the facility, as well as those purchased by a customer.

Due to the flexibility of the pouch 22 including its contents and the low weight owing to its cloth/film construction, an operator 14 wearing the garment 26 is neither significantly burdened nor restricted in his or her movement by the system 10. In particular, the operator's hands and arms are completely free to accomplish any required task while wearing the garment mounted system. It will be understood that an operator wearing the system can walk or otherwise traverse a space in which RFID tagged items are situated. The system 10 will read all of the tags within range of the antenna array 11. The reader 12 and computer 15 can either temporarily store the data in their memories and can later transfer it to a server or can wirelessly transmit the data to a remote server over a Wi-Fi or like connection with the computer 15.

While the system has been described as being mounted on a vest-style garment, other arrangements are envisioned. Where a lab coat or gown is used as the garment 26, the length of the antenna can be increased. It is also possible to arrange the antenna array in a stole or scarf garment. The "smart" garment based system, besides use in retail settings, can be used in other applications such as a factory assembly line, shipping department, and healthcare facilities. The system can verify assembly or shipping accuracy, among other applications, as well as inventory.

It should be evident that this disclosure is by way of example and that various changes may be made by adding, modifying or eliminating details.

## Claims

1. An RFID tag reading system arranged to by carried by an operator while the operator's hands and arms remain free to accomplish tasks, the system including an RFID reader and a computer interconnected to the reader to control functions the reader and receive data generated by the reader, the computer being responsive to word commands from the operator to effectuate different functions of the reader.

2. The system of claim 1, wherein the computer is programmed to signal the operator when a RFID tag is read by the reader.

3. The system of claim 2, wherein the computer signals the operator only the first time a particular tag is read.

4. The system of either claim 2 or claim 3, wherein the computer is programmed to signal the operator with a signal intensity proportional to the strength of a tag signal received by the reader.

5. The system of claim 4, wherein signals from the computer to the operator are audio.

6. The system of any preceding claim, wherein the computer includes a Wi-Fi connection to communicate with a server maintained at premises at which the system is used.

7. The system of any preceding claim, wherein the computer is programmed to verify receipt of a verbal command from the operator.

8. The system of any preceding claim, including an antenna arrangement connected to the reader for energizing RFID tags and receiving signals from RFID tags, the antenna being constructed and arranged to be draped over a shoulder of the operator.

9. The system of any preceding claim, wherein the computer is a single card computer.
